(19) Europäisches Patentamt
European Patent Office
Office européen des brevets

(11) EP 2 175 345 A1

(12) EUROPEAN PATENT APPLICATION

(43) Date of publication:
14.04.2010 Bulletin 2010/15

(51) Int Cl.:
*G06F 1/16* (2006.01)

(21) Application number: 09172484.9

(22) Date of filing: 07.10.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 07.10.2008 US 103494
08.10.2008 US 103721
07.10.2008 US 103505 P

(71) Applicant: Research in Motion Limited
Waterloo, ON N2L 3W8 (CA)
(72) Inventors:
• Pollock, Stuart, Coleman, Edmond
Waterloo Ontario N2L 5Z5 (CA)
• Bells, Matthew
Waterloo Ontario N2L 5Z5 (CA)

(74) Representative: MERH-IP
Matias Erny Reichl Hoffmann
Paul-Heyse-Strasse 29
80336 München (DE)

(54) **A method and handheld electronic device having a graphic user interface with efficient orientation sensor use**

(57)    A method and handheld electronic device having a graphic user interface with efficient orientation sensor input use are provided. In accordance with one embodiment, there is provided a method of rendering a graphical user interface (GUI) on a portable electronic device, comprising: displaying a user interface screen of a foreground application on a display screen of the portable electronic device in a first screen orientation; receiving a device orientation event notification from an orientation sensor of the portable electronic device, the device orientation event notification specifying a device orientation; determining a preferred screen orientation associated with the device orientation; determining whether the preferred screen orientation matches a screen orientation rule for the foreground application; and re-displaying the user interface screen on the display screen in accordance with the preferred screen orientation when the preferred screen orientation matches the screen orientation rule for the foreground application only when it differs from the first screen orientation.

FIG. 9

**Description**

## TECHNICAL FIELD

The present disclosure relates generally to input mechanisms for electronic devices, and more particularly to a method and handheld electronic device having a graphic user interface with efficient orientation sensor input use.

## BACKGROUND

Handheld electronic devices sometimes use orientation sensors (such as an accelerometer or gyroscope) as an input mechanism for various applications or device operations. However, the input provided by the orientation sensor depends on the type of orientation sensor, its specifications/capabilities, and its control mechanism which may comprise, for example, an on-board control mechanism and/or control by the processor of the host electronic device. Some orientation sensor implementations result in unneeded inputs or notifications being processed by the processor of the host device. This increases the processing requirements of the host processor needlessly and consumes power. Thus, there remains a need for improved mechanisms for utilizing orientation sensor-based input, particularly on handheld electronic devices.

## BRIEF DESCRIPTION OF THE DRAWINGS

FIG. 1 is a block diagram illustrating a communication system including a mobile communication device to which example embodiments of the present disclosure can be applied;

FIG. 2 is a block diagram illustrating a mobile communication device in accordance with one example embodiment of the present disclosure;

FIG. 3 is a front view of the mobile communication device of FIG. 2 in accordance with one example embodiment of the present disclosure;

FIG. 4 is a simplified sectional view of the mobile communication device of FIG. 2 with the switch shown in a rest position;

FIG. 5 illustrates a Cartesian dimensional coordinate system of a touchscreen which map locations of touch signals in accordance with one example embodiment of the present disclosure;

FIG. 6 is a block diagram of a device orientation detection subsystem comprising a digital 3-axis accelerometer in accordance with one example embodiment of the present disclosure;

FIGs. 7A to 7F illustrated six (6) device orientations recognized by an device orientation subsystem of the handheld electronic device in accordance with one example embodiment of the present disclosure;

FIGs. 8A to 8C are schematic diagrams illustrating the assignment of pitch and roll vectors of a 3-axis accelerometer in accordance with an example embodiment of the present disclosure;

FIG. 9 is a flowchart illustrating example operations for changing the screen orientation of a graphical user interface (GUI) in response to a change in device orientation in accordance with one example embodiment of the present disclosure;

FIG. 10A is a flowchart illustrating example operations for changing a foreground application in accordance with one example embodiment of the present disclosure;

FIG. 10B is a flowchart illustrating example operations for changing a foreground application in accordance with another example embodiment of the present disclosure; and

FIG. 11 is a flowchart illustrating example operations for disabling an accelerometer when not in use in accordance with one example embodiment of the present disclosure.

Like reference numerals are used in the drawings to denote like elements and features.

## DETAILED DESCRIPTION OF EXAMPLE EMBODIMENTS

The embodiments described herein generally relate to portable electronic devices. Examples of portable electronic devices include mobile (wireless) communication devices such as pagers, cellular phones, Global Positioning System (GPS) navigation devices and other satellite navigation devices, smartphones, wireless organizers, personal digital assistants and wireless-enabled notebook computers. At least some of these portable electronic devices may be handheld electronic devices. The portable electronic device may be a portable electronic device without wireless communication capabilities such as a handheld electronic game device, digital photograph album, digital camera and video recorder such as a camcorder. Example portable electronic devices could have a touchscreen display, a mechanical keyboard or keypad and a touchscreen display, or a conventional non-touchscreen display with a mechanical keyboard. These examples are intended to be non-limiting.

The present disclosure provides a method and handheld electronic device for changing a screen orientation of a graphical user interface (GUI) in response to a change in device orientation. The present disclosure also provides a method and handheld electronic device which filters device orientation event notifications which trigger re-display of the GUI so as to remove those which do not require a change in the screen orientation of the GUI.

In accordance with another embodiment of the present disclosure, there is provided a method of rendering a graphical user interface (GUI) on a portable electronic device, comprising: displaying a user interface screen of a foreground application on a display screen of the portable electronic device in a first screen orientation; receiving a device orientation event notification from an orientation sensor of the portable electronic device, the device orientation event notification specifying a device orientation; determining a preferred screen orientation associated with the device orientation; determining whether the preferred screen orientation matches a screen orientation rule for the foreground application; and re-displaying the user interface screen on the display screen in accordance with the preferred screen orientation when the preferred screen orientation matches the screen orientation rule for the foreground application only when it differs from the first screen orientation.

In accordance with another embodiment of the present disclosure, there is provided a method of rendering a graphical user interface (GUI) on a portable electronic device, comprising: displaying a user interface screen of a foreground application on a display screen of the portable electronic device in a first screen orientation; receiving input to change the foreground application from a first application to a second application; determining whether the first screen orientation matches a screen orientation rule for the second application; displaying a user interface screen of the second application in accordance with first screen orientation when it matches the screen orientation rule for the second application; and displaying a user interface screen of the second application in accordance with an alternate screen orientation specified by the second application when the first screen orientation does not match the screen orientation rule for the second application.

In accordance with a further embodiment of the present disclosure, a method of controlling an orientation sensor of a portable electronic device, the method comprising: determining when a display screen of the portable electronic device is in a low power mode or its backlight is deactivated; determining whether the orientation sensor is required by any active applications on the portable electronic device when the display screen is in the low power mode or its backlight is deactivated; and deactivating the orientation sensor when the display screen is in the low power mode or its backlight is deactivated and the orientation sensor is not required by any active applications on the portable electronic device.

In accordance with a further embodiment of the present disclosure, a method of controlling an orientation sensor of a portable electronic device, the method comprising: monitoring for a trigger condition for initiating a low power mode in which a backlight of a display screen of the portable electronic device is deactivated; and discontinuing the sending of device orientation event notifications to a user interface manager when the backlight of the display screen of the portable electronic device is deactivated.

In accordance with a further embodiment of the present disclosure, there is provided a computer program product comprising a computer readable medium having stored thereon computer program instructions for implementing a method on a handheld electronic device for controlling its operation, the computer executable instructions comprising instructions for performing the method(s) set forth herein.

**Example mobile communication device**

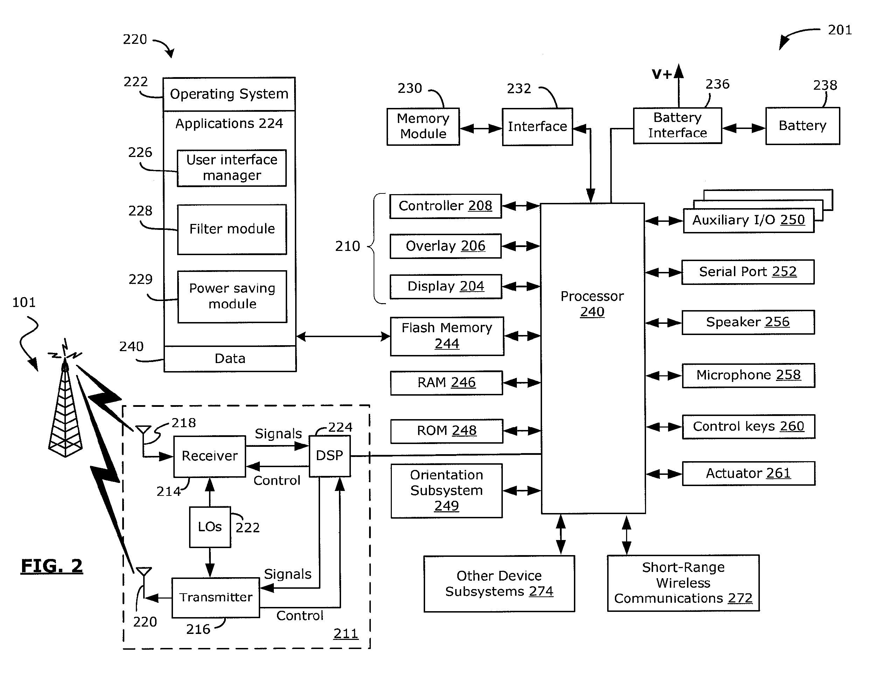

Reference is now made to FIGs. 2 to 4 which illustrate a mobile communication device 201 in which example embodiments described in the present disclosure can be applied. The mobile communication device 201 is a two-way communication device having at least data and possibly also voice communication capabilities, and the capability to communicate with other computer systems, for example, via the Internet. Depending on the functionality provided by the mobile communication device 201, in various embodiments the device may be a data communication device, a multiple-mode communication device configured for both data and voice communication, a smartphone, a mobile telephone or a PDA (personal digital assistant) enabled for wireless communication, or a computer system with a wireless modem.

The mobile communication device 201 includes a controller comprising at least one processor 240 such as a microprocessor which controls the overall operation of the mobile communication device 201, and a wireless communication subsystem 211 for exchanging radio frequency signals with the wireless network 101. The processor 240 interacts with the communication subsystem 211 which performs communication functions. The processor 240 interacts with additional device subsystems including a display (screen) 204, such as a liquid crystal display (LCD) screen, with a touch-sensitive input surface or overlay 206 connected to an electronic controller 208 that together make up a touchscreen display 210. The touch-sensitive overlay 206 and the electronic controller 208 provide a touch-sensitive input device and the processor 240 interacts with the touch-sensitive overlay 206 via the electronic controller 208.

The processor 240 interacts with additional device subsystems including flash memory 244, random access memory (RAM) 246, read only memory (ROM) 248, auxiliary input/output (I/O) subsystems 250, data port 252 such as serial data port, such as a Universal Serial Bus (USB) data port, speaker 256, microphone 258, control keys 260, at least one actuator 261, short-range communication subsystem 272, and other device subsystems generally designated as 274. Some of the subsystems shown in FIG. 2 perform communication-related functions, whereas other subsystems may provide "resident" or on-device functions.

The communication subsystem 211 includes a receiver 214, a transmitter 216, and associated components, such as one or more antenna elements 218 and 221, local oscillators (LOs) 222, and a processing module such as a digital signal processor (DSP) 224. The antenna elements 218 and 221 may be embedded or internal to the mobile communication device 201 and a single antenna may be shared by both receiver and transmitter, as is known in the art. As will be apparent to those skilled in the field of communication, the particular design of the wireless communication subsystem 221 depends on the wireless network 101 in which mobile communication device 201 is intended to operate.

The mobile communication device 201 may communicate with any one of a plurality of fixed transceiver base stations 108 of the wireless network 101 within its geographic coverage area. The mobile communication device 201 may send and receive communication signals over the wireless network 101 after the required network registration or activation procedures have been completed. Signals received by the antenna 218 through the wireless network 101 are input to the receiver 214, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 224. In a similar manner, signals to be transmitted are processed, including modulation and encoding, for example, by the DSP 224. These DSP-processed signals are input to the transmitter 216 for digital-to-analog (D/A) conversion, frequency up conversion, filtering, amplification, and transmission to the wireless network 101 via the antenna 221. The DSP 224 not only processes communication signals, but may also provide for receiver and transmitter control. For example, the gains applied to communication signals in the receiver 214 and the transmitter 216 may be adaptively controlled through automatic gain control algorithms implemented in the DSP 224.

The processor 240 operates under stored program control and executes software modules 220 stored in memory such as persistent memory, for example, in the flash memory 244. As illustrated in FIG. 2, the software modules 220 comprise operating system software 222, software applications 224 comprising a user interface manager 226, a filter module 228 and a power saving module 229. The user interface manager 226 renders and displays the GUI of the device 201 in accordance with instructions of the operating system 222 and applications 224 (as applicable). The filter module 228 filters device orientation event notifications received from an orientation sensor such as an accelerometer and/or device orientation subsystem 249 prior to further processing by one or more applications 224 on the device 201. The power saving mode module 229 implements a power saving mode for disabling the orientation sensor of the device orientation subsystem 249, for example, when the display screen 204 is not in use.

The filter module 228 could be part of the UI manager 226 in some embodiments, and the power saving module 229 could be part of the operating system 222 In some example embodiments, the operating system software 222 and UI manager 226 and may be parts of an integrated program and interact with each other when performing device functions. In some example embodiments, the functions performed by one or more the software modules 220 may be realized as a plurality of independent elements, and any one or more of these elements may be implemented as parts of other software applications.

Those skilled in the art will appreciate that the software modules 220 or parts thereof may be temporarily loaded into volatile memory such as the RAM 246. The RAM 246 is used for storing runtime data variables and other types of data or information, as will be apparent to those skilled in the art. Although specific functions are described for various types of memory, this is merely an example, and those skilled in the art will appreciate that a different assignment of functions to types of memory could also be used.

The software applications 224 may include a range of applications, including, for example, an address book application, a messaging application, a calendar application, and/or a notepad application. In some embodiments, the software applications 224 include an email message application, a push content viewing application, a voice communication (i.e. telephony) application, a map application, and a media player application. Each of the software applications 224 may include layout information defining the placement of particular fields and graphic elements (e.g. text fields, input fields, icons, etc.) in the user interface (i.e. the display device 204) according to the application.

In some embodiments, the auxiliary input/output (I/O) subsystems 250 may comprise an external communication link or interface, for example, an Ethernet connection. The mobile communication device 201 may comprise other wireless communication interfaces for communicating with other types of wireless networks, for example, a wireless network such as an orthogonal frequency division multiplexed (OFDM) network or a GPS transceiver for communicating with a GPS satellite network (not shown). The auxiliary I/O subsystems 250 may comprise a vibrator for providing vibratory notifications in response to various events on the mobile communication device 201 such as receipt of an electronic communication or incoming phone call, or for other purposes such as haptic feedback (touch feedback).

In some embodiments, the mobile communication device 201 also includes a removable memory card 230 (typically comprising flash memory) and a memory card interface 232. Network access typically associated with a subscriber or user of the mobile communication device 201 via the memory card 230, which may be a Subscriber Identity Module (SIM) card for use in a GSM network or other type of memory card for use in the relevant wireless network type. The memory card 230 is inserted in or connected to the memory card interface 232 of the mobile communication device 201 in order to operate in conjunction with the wireless network 101.

The mobile communication device 201 stores data 240 in an erasable persistent memory, which in one example embodiment is the flash memory 244. In various embodiments, the data 240 includes service data comprising information required by the mobile communication device 201 to establish and maintain communication with the wireless network 101. The data 240 may also include user application data such as email messages, address book and contact information, calendar and schedule information, notepad documents, image files, and other commonly stored user information stored on the mobile communication device 201 by its user, and other data. The data 240 stored in the persistent memory (e.g. flash memory 244) of the mobile communication device 201 may be organized, at least partially, into a number of databases each containing data items of the same data type or associated with the same application. For example, email messages, contact records, and task items may be stored in individual databases within the device memory.

The serial data port 252 may be used for synchronization with a user's host computer system (not shown). The serial data port 252 enables a user to set preferences through an external device or software application and extends the capabilities of the mobile communication device 201 by providing for information or software downloads to the mobile communication device 201 other than through the wireless network 101. The alternate download path may, for example, be used to load an encryption key onto the mobile communication device 201 through a direct, reliable and trusted connection to thereby provide secure device communication.

In some embodiments, the mobile communication device 201 is provided with a service routing application programming interface (API) which provides an application with the ability to route traffic through a serial data (i.e., USB) or Bluetooth® (Bluetooth® is a registered trademark of Bluetooth SIG, Inc.) connection to the host computer system using standard connectivity protocols. When a user connects their mobile communication device 201 to the host computer system via a USB cable or Bluetooth® connection, traffic that was destined for the wireless network 101 is automatically routed to the mobile communication device 201 using the USB cable or Bluetooth® connection. Similarly, any traffic destined for the wireless network 101 is automatically sent over the USB cable Bluetooth® connection to the host computer system for processing.

The mobile communication device 201 also includes a battery 238 as a power source, which is typically one or more rechargeable batteries that may be charged, for example, through charging circuitry coupled to a battery interface such as the serial data port 252. The battery 238 provides electrical power to at least some of the electrical circuitry in the mobile communication device 201, and the battery interface 236 provides a mechanical and electrical connection for the battery 238. The battery interface 236 is coupled to a regulator (not shown) which provides power V+ to the circuitry of the mobile communication device 201.

The short-range communication subsystem 272 is an additional optional component which provides for communication between the mobile communication device 201 and different systems or devices, which need not necessarily be similar devices. For example, the subsystem 272 may include an infrared device and associated circuits and components, or a wireless bus protocol compliant communication mechanism such as a Bluetooth® communication module to provide for communication with similarly-enabled systems and devices.

A predetermined set of applications that control basic device operations, including data and possibly voice communication applications will normally be installed on the mobile communication device 201 during or after manufacture. Additional applications and/or upgrades to the operating system 221 or software applications 224 may also be loaded onto the mobile communication device 201 through the wireless network 101, the auxiliary I/O subsystem 250, the serial port 252, the short-range communication subsystem 272, or other suitable subsystem 274 other wireless communication interfaces. The downloaded programs or code modules may be permanently installed, for example, written into the program memory (i.e. the flash memory 244), or written into and executed from the RAM 246 for execution by the processor 240 at runtime. Such flexibility in application installation increases the functionality of the mobile communication device 201 and may provide enhanced on-device functions, communication-related functions, or both. For example, secure communication applications may enable electronic commerce functions and other such financial transactions to be performed using the mobile communication device 201.

The mobile communication device 201 may provide two principal modes of communication: a data communication mode and an optional voice communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by an email message application and output to the display 242. A user of the mobile communication device 201 may also compose data items, such as email messages, for example, using the touch-sensitive overlay 206 in conjunction with the display device 204 and possibly the control buttons 260 and/or the auxiliary I/O subsystems 250. These composed items may be transmitted through the communication subsystem 211 over the wireless network 101.

In the voice communication mode, the mobile communication device 201 provides telephony functions and operates as a typical cellular phone. The overall operation is similar, except that the received signals would be output to the speaker 256 and signals for transmission would be generated by a transducer such as the microphone 222. The telephony functions are provided by a combination of software/firmware (i.e., the voice communication module) and hardware (i.e., the microphone 222, the speaker 256 and input devices). Alternative voice or audio I/O subsystems, such as a voice message recording subsystem, may also be implemented on the mobile communication device 201. Although voice or audio signal output is typically accomplished primarily through the speaker 256, the display device 204 may also be used to provide an indication of the identity of a calling party, duration of a voice call, or other voice call related information.

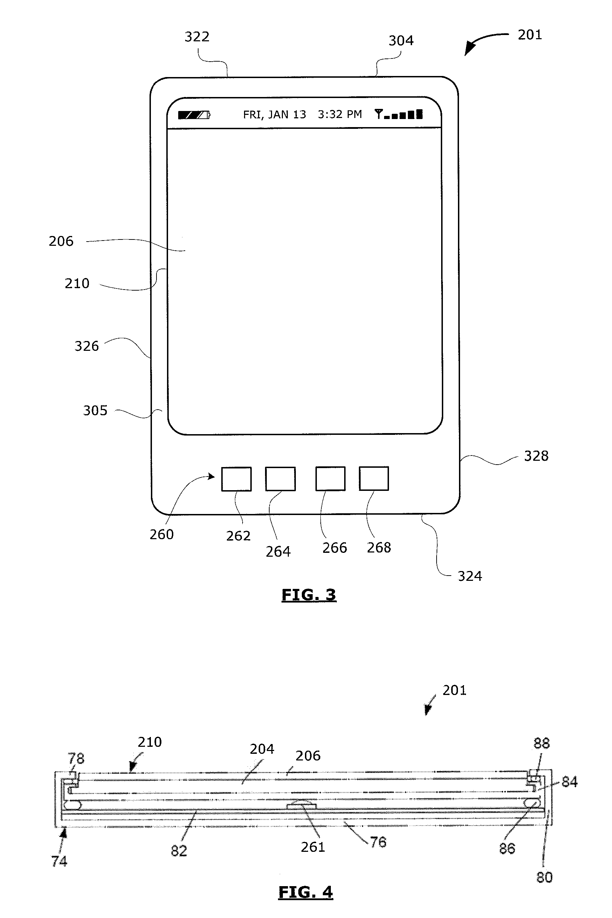

Referring now to FIGs. 3 and 4, the construction of the device 201 will be described in more detail. The device 201 includes a rigid case 304 for housing the components of the device 201 that is configured to be held or cradleable in a user's hand while the device 201 is in use. The touchscreen display 210 is mounted within a front face 305 of the case 304 so that the case 304 frames the touchscreen display 210 and exposes it for user-interaction therewith. The case 304 has opposed top and bottom ends designated by references 322, 324 respectively, and left and right sides designated by references 326, 328 respectively which extend transverse to the top and bottom ends 322, 324. In the shown embodiments of FIG. 3A and 3B, the case 304 (and device 201) is elongate having a length defined between the top and bottom ends 322, 324 longer than a width defined between the left and right sides 326, 328. Other device dimensions are also possible.

As further illustrated in FIG. 4, the case 304 includes a back 76, a frame 78 which frames the touch-sensitive display 210, sidewalls 80 that extend between and generally perpendicular to the back 76 and the frame 78, and a base 82 that is spaced from and generally parallel to the back 76. The base 82 can be any suitable base and can include, for example, a printed circuit board or flex circuit board (not shown). The back 76 includes a plate (not shown) that is releasably attached for insertion and removal of, for example, the battery 238 and the memory module 230 described above. It will be appreciated that the back 76, the sidewalls 80 and the frame 78 can be injection molded, for example.

The display device 204 and the overlay 206 can be supported on a support tray 84 of suitable material such as magnesium for providing mechanical support to the display device 204 and overlay 206. The display device 204 and overlay 206 are biased away from the base 82, toward the frame 78 by biasing elements 86 such as gel pads between the support tray 84 and the base 82. Compliant spacers 88 which, for example, can also be in the form of gel pads are located between an upper portion of the support tray 84 and the frame 78. The touchscreen display 210 is moveable within the case 304 as the touchscreen display 210 can be moved toward the base 82, thereby compressing the biasing elements 86. The touchscreen display 210 can also be pivoted within the case 304 with one side of the touchscreen display 210 moving toward the base 82, thereby compressing the biasing elements 86 on the same side of the touchscreen display 210 that moves toward the base 82.

The actuator 261 may be depressed by applying sufficient force to the touch-sensitive display 210 to overcome the actuation force of the actuator 261. The actuator 261 may be actuated by pressing anywhere on the touch-sensitive display 210. The actuator 261 may provide input to the processor 240 when actuated. Actuation of the actuator 261 may result in provision of tactile feedback. Although a single actuator is shown any suitable number of actuators can be used. In one example embodiment, the actuator 261 is supported on one side of the base 82 which can be a printed circuit board while the opposing side provides mechanical support and electrical connection for other components (not shown) of the device 201. The actuator 261 can be located between the base 82 and the support tray 84. The actuator 261, which can be a mechanical dome-type switch (or in other example embodiments a plurality of mechanical dome-type switches), for example, can be located in any suitable position such that displacement of the touchscreen display 210 resulting from a user pressing the touchscreen display 210 with sufficient force to overcome the bias and to overcome the actuation force for the switch, depresses and actuates the switch. Actuators other than mechanical dome-type switches can be used in other embodiments.

In the example embodiment the actuator 261 is in contact with the support tray 84. Thus, depression of the touchscreen display 210 by application of a force thereto, causes actuation of the actuator 261, thereby providing the user with a positive tactile quality during user interaction with the user interface of the 201. The actuator 261 is not actuated in the rest position shown in FIG. 4, absent applied force by the user. It will be appreciated that the actuator 261 can be actuated by pressing anywhere on the touchscreen display 210 to cause movement of the touchscreen display 210 in the form of movement parallel with the base 82 or pivoting of one side of the touchscreen display 210 toward the base 82. The actuator 261 is connected to the processor 240 and can be used for further input to the processor when actuated.

The touchscreen display 210 can be any suitable touchscreen display such as a capacitive touchscreen display. A capacitive touchscreen display 210 includes the display device 204 and the touch-sensitive overlay 206, in the form of a capacitive touch-sensitive overlay 206. It will be appreciated that the capacitive touch-sensitive overlay 206 includes a number of layers in a stack and is fixed to the display device 204 via a suitable optically clear adhesive. The layers can include, for example a substrate fixed to the display device 204 (e.g. LCD display) by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers can be any suitable material such as patterned indium tin oxide (ITO).

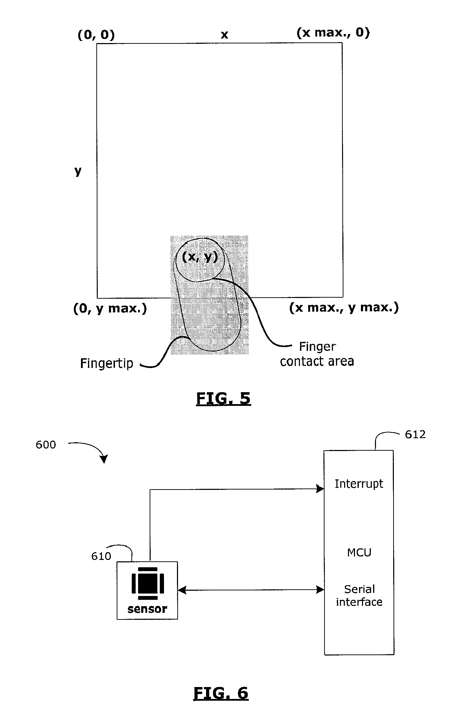

Each of the touch sensor layers comprises an electrode layer each having a number of spaced apart transparent electrodes. The electrodes may be a patterned vapour-deposited ITO layer or ITO elements. The electrodes may be, for example, arranged in an array of spaced apart rows and columns. As shown in FIG. 5, the touch sensor layers/ electrode layers are each associated with a coordinate (e.g., x or y) in a coordinate system used to map locations on the touchscreen display 210, for example, in Cartesian coordinates (e.g., x and y-axis coordinates). The intersection of the rows and columns of the electrodes may represent pixel elements defined in terms of an (x, y) location value which can form the basis for the coordinate system. Each of the touch sensor layers provide a signal to the controller 208 which represent the respective x and y coordinates of the touchscreen display 210. That is, x locations are provided by a signal generated by one of the touch sensor layers and y locations are provided by a signal generated by the other of the touch sensor layers.

The electrodes in the touch sensor layers/electrode layers respond to changes in the electric field caused by conductive objects in the proximity of the electrodes. When a conductive object is near or contacts the touch-sensitive overlay 206, the object draws away some of the charge of the electrodes and reduces its capacitance. The controller 208 receives signals from the touch sensor layers of the touch-sensitive overlay 206, detects touch events by determining changes in capacitance which exceed a predetermined threshold, and determines the centroid of a contact area defined by electrodes having a change in capacitance which exceeds the predetermined threshold, typically in x, y (Cartesian) coordinates.

The controller 208 sends the centroid of the contact area to the processor 240 of the device 201 as the location of the touch event detected by the touchscreen display 210. Depending on the touch-sensitive overlay 206 and/or configuration of the touchscreen display 210, the change in capacitance which results from the presence of a conductive object near the touch-sensitive overlay 206 but not contact the touch-sensitive overlay 206, may exceed the predetermined threshold in which case the corresponding electrode would be included in the contact area. The detection of the presence of a conductive object such as a user's finger or a conductive stylus is sometimes referred to as finger presence/stylus presence.

It will be appreciated that other attributes of a touch event on the touchscreen display 210 can be determined. For example, the size and the shape (or profile) of the touch event on the touchscreen display 210 can be determined in addition to the location based on the signals received at the controller 208 from the touch sensor layers. For example, the touchscreen display 210 may be used to create a pixel image of the contact area created by a touch event. The pixel image is defined by the pixel elements represented by the intersection of electrodes in the touch sensor layers/electrode layers. The pixel image may be used, for example, to determine a shape or profile of the contact area.

The centroid of the contact area is calculated by the controller 208 based on raw location and magnitude (e.g., capacitance) data obtained from the contact area. The centroid is defined in Cartesian coordinates by the value ($X_c$, $Y_c$). The centroid of the contact area is the weighted averaged of the pixels in the contact area and represents the central coordinate of the contact area. By way of example, the centroid may be found using the following equations:

$$X_c = \frac{\sum_{i=1}^{n} Z_i * x_i}{\sum_{i=1}^{n} Z_i} \qquad (1)$$

$$Y_c = \frac{\sum_{i=1}^{n} Z_i * y_i}{\sum_{i=1}^{n} Z_i} \qquad (2)$$

where $X_c$ represents the x-coordinate of the centroid of the contact area, $Y_c$ represents the y-coordinate of the centroid of the contact area, x represents the x-coordinate of each pixel in the contact area, y represents the y-coordinate of each pixel in the contact area, Z represents the magnitude (capacitance value or resistance) at each pixel in the contact area, the index i represents the electrodes in the contact area and n represents the number of electrodes in the contact area.

Other methods of calculating the centroid will be understood to persons skilled in the art.

The controller 208 of the touchscreen display 210 is typically connected using both interpret and serial interface ports to the processor 240. In this way, an interrupt signal which indicates a touch event has been detected, the centroid of the contact area, as well as raw data regarding the location and magnitude of the activated electrodes in the contact area are passed to the processor 240. However, in other example embodiments only an interrupt signal which indicates a touch event has been detected and the centroid of the contact area are passed to the processor 240. In embodiments where the raw data is passed to the processor 240, the detection of a touch event (i.e., the application of an external force to the touch-sensitive overlay 206) and/or the determination of the centroid of the contact area may be performed by the processor 240 of the device 201 rather than the controller 208 of the touchscreen display 210.

In other embodiments, the touchscreen display 210 may be a display device, such as an LCD screen, having the touch-sensitive input surface (overlay) 206 integrated therein. An example of such a touchscreen is described in commonly owned U.S. patent publication no. 2004/0155991, published August 12, 2004 (also identified as U.S. patent application no. 10/717,877, filed November 20, 2003) which is incorporated herein by reference.

While a specific embodiment of the touchscreen display 210 has been described, any suitable type of touchscreen in the handheld electronic device of the present disclosure including, but not limited to, a capacitive touchscreen, a resistive touchscreen, a surface acoustic wave (SAW) touchscreen, an embedded photo cell touchscreen, an infrared (IR) touchscreen, a strain gauge-based touchscreen, an optical imaging touchscreen, a dispersive signal technology touchscreen, an acoustic pulse recognition touchscreen or a frustrated total internal reflection touchscreen. The type of touchscreen technology used in any given embodiment will depend on the handheld electronic device and its particular application and demands.

Referring again to FIG. 5, a Cartesian (two dimensional) coordinate system used to map locations of the touchscreen display 210 in accordance with one embodiment of the present disclosure will be described. The touchscreen display 210 defines a Cartesian coordinate system defined by x and y-axes in the input plane of the touchscreen display 210. Each touch event on the touchscreen display 210 returns a touch point defined in terms of an (x, y) value. The returned touch point is typically the centroid of the contact area.

In the shown embodiment, the touchscreen display 210 has a rectangular touch-sensitive overlay 206; however, in other embodiments, the touch-sensitive overlay 206 could have a different shape such as a square shape. The rectangular touch-sensitive overlay 206 results in a screen which is divided into a rectangular of pixels with positional values ranging from 0 to the maximum in each of the x and y-axes (x max. and y max. respectively). The x-axis extends in the same direction as the width of the device 201 and the touch-sensitive overlay 206. The y-axis extends in the same direction as the length of the device 201 and the touch-sensitive overlay 206.

The coordinate system has an origin (0, 0) which is located at the top left-hand side of the touchscreen display 210. For purposes of convenience, the origin (0, 0) of the Cartesian coordinate system is located at this position in all of the embodiments described in the present disclosure. However, it will be appreciated that in other embodiments the origin (0, 0) could be located elsewhere such as at the bottom left-hand side of the touchscreen display 210, the top right-hand side of the touchscreen display 210, or the bottom right-hand side of the touchscreen display 210. The location of the origin (0, 0) could be configurable in other embodiments.

During operation, a graphical user interface (GUI) for controlling the operation of the device 201 is displaying on the touchscreen display 210. The GUI is rendered prior to display by the operating system 222 or an application 224 which causes the processor 240 to display content on the touchscreen display 210. The GUI of the device 201 has a screen orientation in which the text and user interface elements of the GUI are oriented for normal viewing. It will be appreciated that the screen orientation for normal viewing independent of the language supported, that is the screen orientation for normal viewing is the same regardless of whether a row-oriented language or column-oriented language (such as Asian languages) is displayed within the GUI. Direction references in relation to the GUI, such as top, bottom, left, and right, are relative to the current screen orientation of the GUI rather than the device 201 or its case 304.

In embodiments such as that shown in FIG. 5 in which the display screen is rectangular in shape, the screen orientation is either portrait (vertical) or landscape (horizontal). A portrait screen orientation is a screen orientation in which the text and other user interface elements extend in a direction transverse (typically perpendicular) to the length (y-axis) of the display screen. A landscape screen orientation is a screen orientation in which the text and other user interface elements extend in a direction transverse (typically perpendicular) to the width (x-axis) of the display screen. In some embodiments, the GUI of the device 201 changes its screen orientation between a portrait screen orientation and landscape screen orientation in accordance with changes in device orientation.

The mobile communication device 201 also comprises a device orientation subsystem 249 comprising at least one orientation sensor which is connected to the processor 240 and which is controlled by one or a combination of a monitoring circuit and operating software. The device orientation subsystem 249 may comprise two or more orientation sensors or an orientation sensor and an electronic compass. The device orientation subsystem 249 detects the orientation of the mobile communication device 201 or detects information which the orientation of the mobile communication device 201 can be determined, such as acceleration using an accelerometer. In other embodiments, an orientation sensor other than an accelerometer could be used, such as a gravity sensor, a gyroscope, a tilt sensor, an electronic compass, or other suitable sensor, or combinations thereof.

As will be appreciated by persons skilled in the art, an accelerometer is a sensor which converts acceleration from motion (e.g. movement of the mobile communication device 201 or a portion thereof due to the strike force) and gravity which are detected by a sensing element into an electrical signal (producing a corresponding change in output) and is available in one, two or three axis configurations. Accelerometers may produce digital or analog output signals depending on the type of accelerometer. Generally, two types of outputs are available depending on whether an analog or digital accelerometer used: (1) an analog output requiring buffering and analog-to-digital (A/D) conversion; and (2) a digital output which is typically available in an industry standard interface such as an SPI (Serial Peripheral Interface) or I2C (Inter-Integrated Circuit) interface. The output of an accelerometer is typically measured in terms of the gravitational acceleration constant at the Earth's surface, denoted g, which is approximately 9.81 m/s$^2$ (32.2 ft/s$^2$) as the standard average. The accelerometer may be of almost any type including, but not limited to, a capacitive, piezoelectric, piezoresistive, or gas-based accelerometer. The range of accelerometers vary up to the thousands of g's, however for portable electronic devices "low-$g$" accelerometers may be used. Example low-g accelerometers which may be used are MEMS digital accelerometers from Analog Devices, Inc. (ADI), Freescale Semiconductor, Inc. (Freescale) and STMicroelectronics N.V. of Geneva, Switzerland.

Referring briefly to FIG. 6, a device orientation subsystem 246 in accordance with one example embodiment of the present disclosure will be described. In this embodiment, the orientation sensor is an accelerometer. The circuit 600 comprises a digital 3-axis accelerometer 610 connected to the interrupt and serial interface of a controller (MCU) 612. The controller 612 could be the processor 240 of the device 201. The operation of the controller 612 is controlled by software, which may be stored in internal memory of the controller 612. The operational settings of the accelerometer 610 are controlled by the controller 612 using control signals sent from the controller 612 to the accelerometer 610 via the serial interface. The controller 612 may determine the device orientation in accordance with the acceleration measured by the accelerometer 610, or raw acceleration data measured by the accelerometer 610 may be sent to the processor 240 of the device 201 via its serial interface where device orientation is determined by the operating system 222, or other software module 220. In other embodiments, a different digital accelerometer configuration could be used, or a suitable analog accelerometer and control circuit could be used.

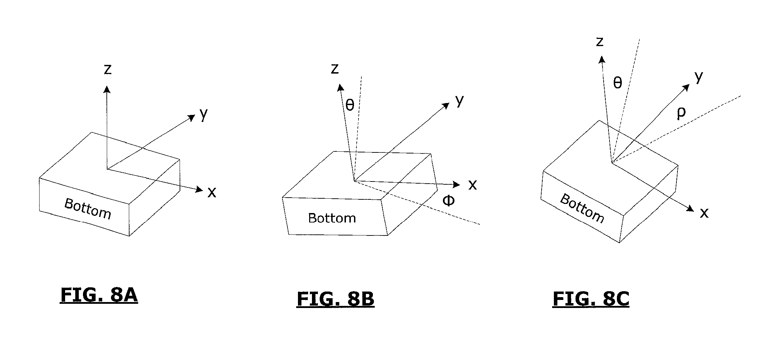

Referring now to FIGs. 8A to 8C, the assignment of pitch and roll vectors of a three-axis accelerometer in accordance with an example embodiment of the present disclosure will be briefly described. Each measurement axis is aligned with an axis of the mobile communication device 201. The x-axis and y-axis are typically aligned with the input plane of the touchscreen display 210. The z-axis is perpendicular to the horizontal plane and detects when the mobile communication device 201 is moved vertically.

As shown in FIG. 8B, pitch ($\phi$) is the angle of the x-axis relative to the ground. $\theta$ is the angle of the z-axis relative to gravity. As shown in FIG. 8C, roll ($\rho$) is the angle of the y-axis relative to the ground. It will be appreciated that rotation may occur about any combination of sensing axes. The concepts and methodology described herein can be applied to any axis orientation and any combination of pitch ($\phi$) angle, roll ($\rho$) angle and $\theta$ (the angle of the z-axis relative to gravity). Pitch ($\phi$), roll ($\rho$) and the angle of the z-axis relative to gravity ($\theta$) of a three-axis accelerometer may be calculated using equations (3) ,(4) and (5):

$$\varphi = \arctan \frac{x_{sensor}}{\sqrt{y^2_{sensor} + z^2_{sensor}}} \qquad (3)$$

$$\rho = \arctan \frac{y_{sensor}}{\sqrt{x^2_{sensorl} + z^2_{sensor}}} \qquad (4)$$

$$\theta = \arctan \frac{\sqrt{x^2_{sensor} + y^2_{sensor}}}{z_{sensor}} \qquad (5)$$

where $x_{sensor}$, $y_{sensor}$ and $z_{sensor}$ are the measurements from the x, y and z-axes of the three-axis accelerometer. It will be appreciated that pitch ($\phi$), roll ($\rho$) and the angle of the z-axis relative to gravity ($\theta$) can also be determined by other means.

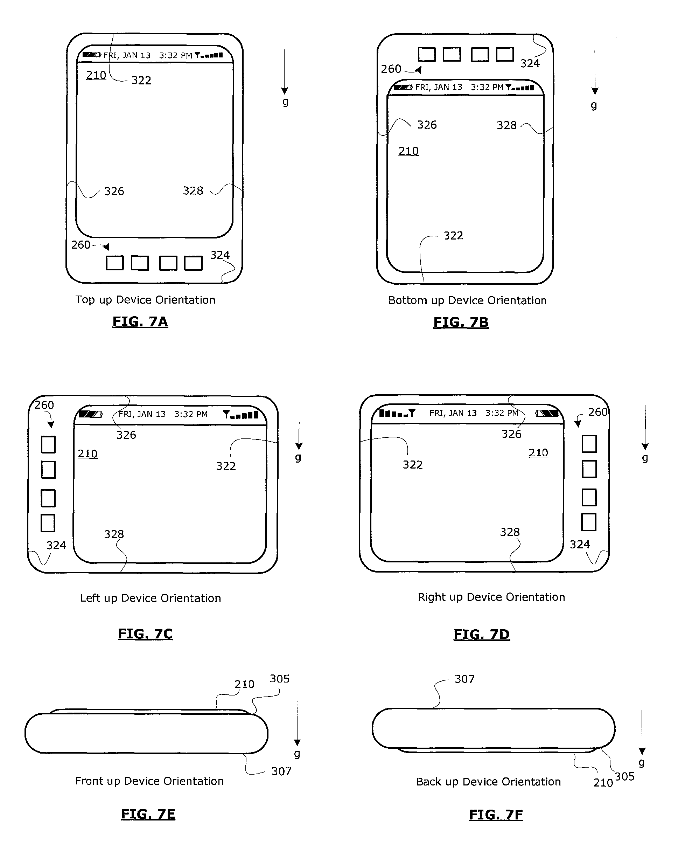

The device 201 includes a user interface manager 226 (shown in FIG. 2) which uses input from the device orientation subsystem 249 to select and update the screen orientation of the GUI presented within the touchscreen display 210 in accordance with the device orientation, amongst other inputs. Referring now to FIG. 7A to 7F, predefined device orientations used by the user interface manager 226 in some embodiments of the present disclosure will be described. The device orientation subsystem 249 or processor 240, depending on the embodiment, uses measurements of the device orientation subsystem 249 (e.g., the accelerometer) to determine the device orientation to be one of six possible device orientations comprising: (1) a "top up" device orientation (as shown in FIG. 7A); (2) a "bottom up" device orientation (as shown in FIG. 7B); (3) a "left up" device orientation (as shown in FIG. 7C); (4) a "right up" device orientation (as shown in FIG. 7D); (5) a "front up" (or "face up") device orientation (as shown in FIG. 7E); and (6) a "back up" device orientation (as shown in FIG. 7F). Other device orientations are possible and could be used in other embodiments.

It will be appreciated that the predefined device orientations are defined by which one of the top 322, bottom 324, left-hand side 326, right-hand side 328, front face 305, and back face 307 of the device 201 are directed generally upwards. Moreover, it will be appreciated that the device 201 need not be orientated precisely in one the illustrated device orientations for the determination of the device orientation. Instead, the predefined device orientations act as reference positions. The device orientation is determined by selecting the reference position (e.g., which of the six predefined device orientations shown in FIG. 7A to 7F) is closest to the actual device orientation. Each of the predefined device orientations may be mapped to orientation values measured by the orientation sensor or derived from its measurements in order to determine the reference position which is closest to the actual device orientation. The orientation values may be used to construct an orientation profile of each of the six predefined device orientations. The orientation values which are mapped to the predefined device orientations, in some embodiments, may be defined, directly or indirectly, in terms of pitch ($\phi$), roll ($\rho$) and the angle of the z-axis relative to gravity ($\theta$) measured by a three-axis accelerometer, which may calculated using equations (3) ,(4) and (5) described above or other suitable calculations.

When the touchscreen display 210 is rectangular in shape as in the illustrated embodiments, the processor 240 in accordance with the instructions of the user interface manager 226 changes the screen orientation of the GUI to a landscape screen orientation when the mobile communication device 201 is (re)positioned in a generally horizontal direction, and changes the screen orientation of the GUI to a portrait screen orientation when the mobile communication device 201 is (re)positioned in a generally vertical direction. The processor 240 may invert or "flip" the screen orientation of the GUI horizontally or vertically if the mobile communication device 201 is flipped horizontally or vertically.

Referring again to the FIG. 7A to 7F, in some embodiments the screen orientation of the GUI is selected in accordance with mappings of screen orientation to device orientation as set forth below (subject to application overrides as described below):

| Device Orientation | Screen Orientation |
|---|---|
| "top up" device orientation (FIG. 7A) | portrait (up) screen orientation |
| "bottom up" device orientation (FIG. 7B) | portrait (down)screen orientation |
| "left up" device orientation (FIG. 7C) | landscape (left) screen orientation |
| "right up" device orientation (FIG. 7D) | landscape (right) screen orientation |
| "front up" device orientation (FIG. 7E) | default/previous screen orientation |
| "back up" device orientation (FIG. 7F) | default/previous screen orientation (or display screen disabled/off) |

Having regard to the above-described screen orientation (also reference to as aspect ratios), it will be appreciated that the screen orientation is portrait in both the "top up" and "bottom up" device orientations shown in FIG. 7A and FIG. 7B, respectively, and that the screen orientation is landscape in both the "left up" and "right up" device orientations shown in FIG. 7C and FIG. 7D, respectively. To differentiate between the variants of the portrait screen orientation in the "top up" and "bottom up" device orientations and landscape screen orientation in the "left up" and "right up" device orientations, a direction of the screen orientation is defined. The direction is relative to a fixed position on the device 201, which is the top 322 of the device 201 in the present embodiment. A different directional reference could be used in other embodiments. Thus, the screen orientation in the "top up" device orientation (FIG. 7A) is the portrait (up) screen orientation because the top 322 of the device 201 is directed upwards relative to the ground and force of gravity. The screen orientation in the "bottom up" device orientation (FIG. 7B) is the portrait (down) screen orientation because the top 322 of the device 201 is directed downwards relative to the ground and force of gravity. Otherwise stated, in the "bottom up" device orientation of FIG. 7B, the bottom 324 of the device 201 is directed upwards relative to the ground and force of gravity.

The screen orientation in the "left up" device orientation (FIG. 7C) is landscape (left) screen orientation because the top 322 of the device 201 is rotated in the vertical plane towards the left side 326 of the device 201. The screen orientation in the "right up" device orientation (FIG. 7D) is landscape (right) screen orientation because the top 322 of the device 201 is rotated in the vertical plane towards the right side 328 of the device 201.

In some embodiments, the "front up" (FIG. 7E) and "back up" (FIG. 7F) device orientations are not associated with a particular screen orientation, except for a default screen orientation. Instead, the screen orientation of device 201 in the "front up" and "back up" device orientations is dependent on the previous screen orientation. That is, the "top up", "bottom up", "left up" and "right up" device orientations have a fixed screen orientation.

As described in more detail below, some of the applications 224 may have a screen orientation of the GUI which varies in accordance with the orientation of the device 201; however, one or more of the applications 224, such as the phone application, may a fixed screen orientation which is unaffected by the device orientation.

Referring again to FIG. 3, the control buttons or keys 260, represented individually by references 262, 264, 266, 268, which are located below the touchscreen display 210 on the front face 305 of the device 201 which generate corresponding input signals when activated. The control keys 260 may be construction using any suitable key construction, for example, the controls keys 260 may each comprise a dome-switch. In other embodiments, the control keys 260 may be located elsewhere such as on a side of the device 201. If no control keys are provided, the function of the control keys 262 - 268 described below may be provided by one or more virtual keys (not shown), which may be part of a virtual toolbar or virtual keyboard.

In some embodiments, the input signals generated by activating (e.g. depressing) the control keys 262 are context-sensitive depending on the current/active operational mode of the device 201 or current/active application 224. The key 262 may be a send/answer key which can be used to answer an incoming voice call, bring up a phone application when there is no incoming voice call, and start a phone call from the phone application when a phone number is selected within that application. The key 264 may be a menu key which invokes context-sensitive menus comprising a list of context-sensitive options. The key 266 may be an escape/back key which cancels the current action, reverses (e.g., "back up" or "go back") through previous user interface screens or menus displayed on the touchscreen display 210, or exits the foreground application 224. The key 268 may be an end/hang up key which ends the current voice call or hides the foreground application 224.

Although in the illustrated embodiments the case 304 is shown as a single unit it could, among other possible configurations, include two or more case members hinged together (such as a flip-phone configuration or a clam shell-style lap top computer, for example), or could be a "slider phone" in which the keyboard is located in a first body which is slide-ably connected to a second body which houses the display screen, the device being configured so that the first body which houses the keyboard can be slide out from the second body for use. In other embodiments, the mobile communication device 201 could have a mechanical keyboard in addition to the touchscreen display 210.

**Device Orientation Event Notification Filtering**

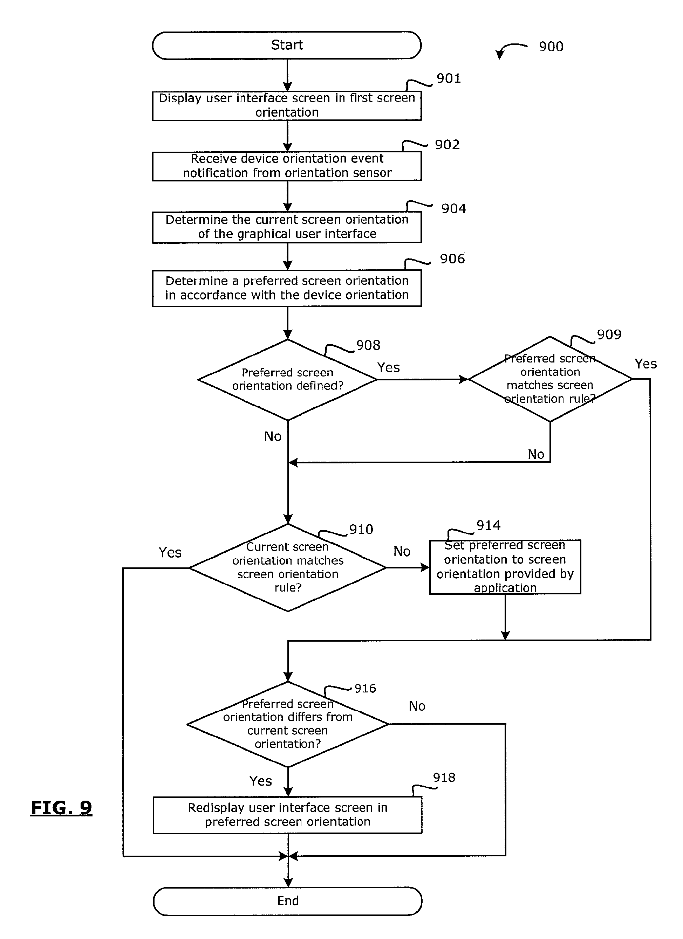

Reference is now made to FIG. 9 which illustrates example operations 900 for filtering device orientation event notifications of the mobile communication device 201 in accordance with one embodiment of the present disclosure. The steps of FIG. 9 may be carried out by routines or subroutines of software executed by, for example, the processor 240. For example, the filtering of device orientation event notifications may be implemented by a subroutine which operates in the background and reports to the operating system 222. The coding of software for carrying out such steps is well within the scope of a person of ordinary skill in the art given the present disclosure.

Device orientation event notifications could be sent by either the device orientation subsystem 249 or processor 240, depending on the embodiment. Device orientation event notifications are received by the operating system 222, which sends device orientation event notifications to the user interface manager 226, for example, to determine whether a change in the screen orientation of the GUI is required. The device orientation event notifications could also be sent by the operating system 222 to other applications 224 on the device 201 if requested by such applications. The device orientation event notifications sent by the operating system 222 may be the same as those received by it, or may be different notifications based on the content of the device orientation event notifications received by the operating system 222.

The operations 900 advantageously filter undesirable, unsolicited or uncalled-for device orientation event notifications received by the operating system 222 so as to provide a more efficient method of rendering and displaying the GUI, and reduce processing operations by the processor 240 or controller 208. The coding of software for carrying out the described method is well within the scope of a person of ordinary skill in the art having regard to the present disclosure.

In the first step, 902 a user interface screen of the GUI is displayed on the display screen 204 in a first screen orientation. The first screen orientation when displaying the GUI is not based on the device orientation but a previously used screen orientation or default screen orientation. The user interface screen displayed could be a home screen of the device 201 or could be a user interface screen of a foreground application 224. In other embodiments, this step could be omitted and the operations 900 start with step 902. That is, the device orientation is determined prior to displaying the user interface screen of the GUI in a first screen orientation.

First, in step 902 the orientation sensor (e.g., accelerometer) and/or device orientation subsystem 249 sends a device orientation event notification to the operating system 222. This device orientation event notification is then received by the operating system 222. The device orientation event notification notifies the operating system 222 that a new device orientation has been detected or that a change in device orientation has been detected by the orientation sensor and/or device orientation subsystem 249. The device orientation event notification also identifies the detected device orientation in terms of one of the predetermined six (6) device orientations described above. The user interface manager 226 uses the device orientation to determine the appropriate screen orientation for the GUI as described above.

Next, in step 904 the current screen orientation of the GUI displayed on the display screen 204 is determined by the filter module 228. As noted above, the screen orientation may be fixed for the device 201 or may be based on the detected device orientation, depending on the foreground application 224 and possibly the device settings. Each application 224 can support any one or more of the screen orientations described above.

Next, in step 906 the filter module 228 determines a preferred screen orientation in accordance with the current device orientation. The device orientation is specified by the device orientation event notification received in step 902 from the orientation sensor. In at least some embodiment, when the device 201 is in one of the "top up", "bottom up", "left up" or "right up" device orientations, the preferred screen orientation is determined in accordance with the following mappings of device orientation to screen orientation:

| Device Orientation | Screen Orientation |
|---|---|
| "top up" device orientation (see FIG. 8A) | portrait (up) screen orientation |
| "bottom up" device orientation (see FIG. 8B) | portrait (down) screen orientation |
| "left up" device orientation (see FIG. 8C) | landscape (left) screen orientation |
| "right up" device orientation (see FIG. 8D) | landscape (right) screen orientation |

Device orientations different from those described above could be used in other embodiments, and different screen orientations than those described above could be mapped to the device orientations in other embodiments. The preferred screen orientation may be overridden under some conditions. Thus, the preferred screen orientation may be considered a preliminary or default screen orientation which is to be applied subject to being overridden by a user interface rule (i.e., a screen orientation rule described below) of the foreground application 224.

If the device 201 is in either of the "front up" (FIG. 8E) or "back up" (FIG. 8F) device orientations, the input plane of the touchscreen display 210 is in the horizontal plane and there is no effective mechanism to unambiguously select a screen orientation for the GUI. As a result, when the device 201 is in either in the "front up" or "back up" device orientation, there is no predetermined screen orientation associated with the device 201 and so no preferred screen orientation.

When the device 201 is in either in the "front up" or "back up" device orientation, the screen orientation for the device orientation is typically a previous screen orientation stored in the memory of the device 201, for example, in a runtime memory used by the user interface manager 226. The previous screen orientation corresponds to the screen orientation when the device 201 was last in one of the "top up", "bottom up", "left up" and "right up" device orientations.

If there is no previous screen orientation stored in memory, for example because the device 201 was turned on while positioned horizontally, e.g. while in the "front up" or "back up" device orientation, a default screen orientation for the device 201 is selected as the screen orientation. In at least some embodiments, the default screen orientation is the screen orientation in the "top up" device orientation, i.e. the portrait (up) screen orientation in the described embodiment. A different default screen orientation could be used in other embodiments.

In some embodiments, the supported screen orientations are the portrait (up) screen orientation, landscape (left) screen orientation and landscape (right) screen orientation, however, the portrait (down) screen orientation is not supported. In some embodiments, the portrait (up) screen orientation may be used when the device 201 is in the "bottom up" device orientation and the portrait (down) screen orientation is not supported.

Next, in step 908 the filter module 228 determines whether the preferred screen orientation was determined or is defined. The preferred screen orientation will be defined provided the device 201 is in one of the "top up", "bottom up", "left up" and "right up" device orientations. The preferred screen orientation cannot be determined or is undefined when the device 201 is in either in the "front up" or "back up" device orientation.

When the preferred screen orientation is defined, the operations 900 proceed to step 909 where the filter module 228 determines if the preferred screen orientation matches a screen orientation rule for the foreground application 224. When the preferred screen orientation is undefined, the operations 900 proceed to step 910.

It will be appreciated that in the described solution that the user interface manager 226 handles decision-making relating to the screen orientation of the GUI rather than the individual applications 224 themselves. This allows, for example, applications 224 to be developed for the device 201 independent of screen orientation and how changes in screen orientation may be handled by the device 201. After an application 224 has been developed, a screen orientation rule defining the allowable screen orientations can be created without having to change the application code and recompile it for use with different screen orientations. Alternatively, a default screen orientation rule defining the allowable screen orientations may be selected by the application developer. The screen orientation rule defining the allowable screen orientations specifies how the user interface manager 226 renders and displays the GUI elements of the user interface screen in the respective screen orientation.

Each application 224 can define a screen orientation rule defining the allowed screen orientation(s) or possibly the allowed screen orientations in one or more specific device orientations. For example, applications 224 can have a landscape rule specifying that landscape screen orientations can be used by the application 224 and a portrait rule specifying that portrait screen orientations can be used by the application 224. In some embodiments, the landscape rule and/or portrait rule are defined for an application 224 when both landscape and/or portrait screen orientation is to be supported by the application. Accordingly, when both the landscape rule and portrait rule are defined, both landscape and portrait screen orientations and the switching between landscape and portrait screen orientations are supported by an application 224. The absence of the landscape rule or portrait rule being defined for a respective application 224 means that the respective screen orientation is not supported. In other embodiments, the landscape rule and portrait rule could be defined for each application 244 and the rules specify whether the landscape screen orientation or portrait screen orientation is supported by the application 224.

In step 909, one or more screen orientation rules defined by the foreground application 224 which specifying the allowed screen orientation(s) are evaluated by the filter module 228 to determined of the preferred screen orientation matches the screen orientation rule(s). If the preferred screen orientation matches, the operations 900 proceed to step 916 where the preferred screen orientation is evaluated. Otherwise, the operations 900 proceed to step 910.

Referring now to step 910, the filter module 228 determines whether the current screen orientation matches a screen orientation rule for the foreground application 224. If the current screen orientation matches the screen orientation rule, the operations 900 end. This may occur when the foreground application 224 has been previously displayed in a different screen orientation, and the last screen orientation used by the foreground application 224 matches the current orientation. This reduces unnecessary further processing of device orientation notifications as explained below.

If the current screen orientation does not match the screen orientation rule, an acceptable alternate screen orientation is requested from the foreground application 224 and the preferred screen orientation is set to the alternate screen orientation (step 914) specified by the foreground application 224 in response to the request. The operations 900 then proceed to step 916 where the preferred screen orientation is evaluated.

Next, in step 916 the preferred screen orientation is evaluated. If the preferred screen orientation is different than the current screen orientation, the screen orientation is changed by the user interface manager 226 (e.g. rotated or flipped) to match the preferred screen orientation (step 918). That is, the GUI is re-displayed on the display screen 204 in a second screen orientation corresponding to the preferred screen orientation.

In the shown embodiment, the user interface manager 226 sends a request to the operating system 222 to change the drawing origin to match the new screen orientation of the GUI displayed on the display screen 204. After the change in the screen orientation, the operating system 222 notifies the user interface manager 226 that the change has been performed (the GUI has been rotated or flipped). After the notification has been received by the user interface manager 226, it reformats all of the GUI interface elements for the new screen orientation (i.e., aspect ratio) and the GUI is re-rendered and re-displayed in accordance with the new screen orientation.

If the preferred screen orientation is the same as the current screen orientation, the screen orientation is not changed and the operations 900 end.

The operations 900 filter device orientation event notifications which would normally be sent to the user interface manager 226 to a trigger a change in the screen orientation of the GUI even though the displayed content in the new screen orientation does not change from the user's perspective (that is, the same screen orientation is used). Changing the screen orientation of the GUI where the displayed content does not change results in unnecessary processing which is inefficient in terms of processing resources, uses unnecessary power which may reduce battery life and may result in an unresponsive GUI. The operations 900 reduce or eliminate requests to re-render and re-display the GUI in such instances by filtering out unnecessary device orientation event notifications.

The filtering method described in the present disclosure also addresses device orientation event notifications resulting from frequently switching ("wobbling) between device orientations (e.g., between "top up" and "front up" device orientations) which do not invoke a change in the screen orientation of the GUI, and spurious device orientation notifications from the device orientation subsystem 249 and/or orientation sensor. This may occur in some device orientations which are close to a threshold between the predetermined device orientations in response to small movements of the device 201 which change the detected device orientation to another device orientation which, though different, has the same screen orientation of the GUI. The following are device orientations which, when switched between, do not invoke a change in the screen orientation of the GUI: (i) "front up" and "top up"; (ii) "front up" and "bottom up"; (iii) "front up" and "left up"; (iv) "front up" and "right up"; (v) "back up" and "top up"; (vi) between "back up" and "bottom up"; (vii) "back up" and "left up"; (viii) and "back up" and "right up".

While the operations 900 have been described as occurring in a particular order, it will be appreciated to persons skilled in the art that some of the steps may be performed in a different order provided that the result of the changed order of any given step will not prevent or impair the occurrence of subsequent steps. Furthermore, some of the steps described above may be combined in other embodiments, and some of the steps described above may be separated into a number of sub-steps in other embodiments. For example, the current screen orientation displayed on the display screen 204 (step 924) may be determined at any time prior to the current screen orientation being evaluated in the operations 900.

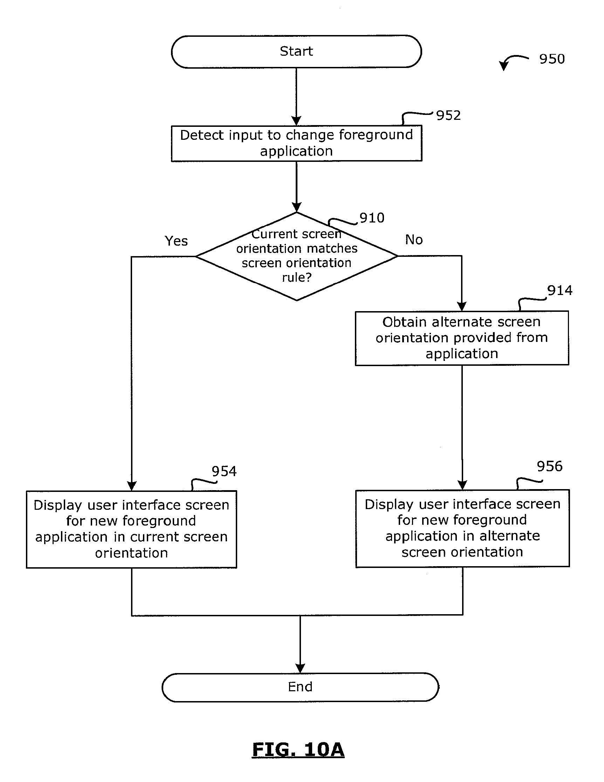

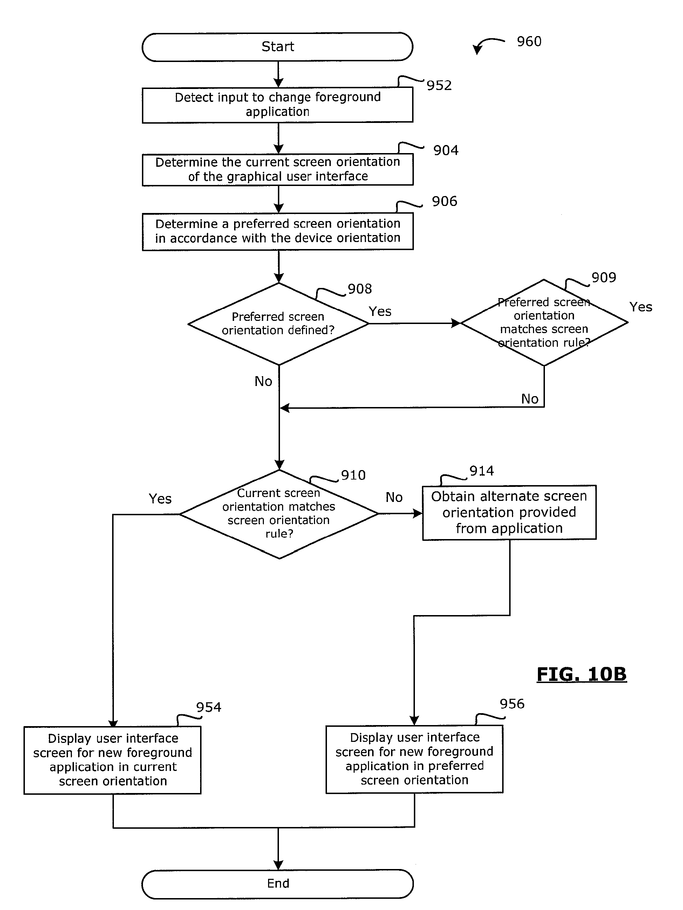

Referring now to FIG. 10A, example operations 950 for changing a foreground application in accordance with one example embodiment of the present disclosure will be described. The steps of FIG. 10 may be carried out by routines or subroutines of software executed by, for example, the processor 240. The coding of software for carrying out such steps is well within the scope of a person of ordinary skill in the art given the present disclosure.

As described above, while the device 201 supports landscape screen orientation and portrait screen orientation and switching between the landscape and portrait screen orientations, some applications 224 may support only the landscape screen orientation or portrait screen orientation. In addition, the particular screen orientations supported by an application 224 may vary. For example, while an application may support landscape screen orientation or portrait screen orientations, the application 224 may not support both the portrait-up and portrait-down screen orientations, or both landscape-left and landscape-right screen orientations.

The operating system 222, in at least some example embodiments, supports the simultaneous execution of multiple applications 224 in separate processes. However, because these processes may have conflicting requirements in terms of landscape and portrait screen orientations, the UI manager 226 is required to dynamically change (e.g., rotation) the screen orientation of the display screen 204 in response to applications 224 becoming the foreground application when the current screen orientation is not supported by the foreground application. FIG. 10A provides a method of rendering the GUI which addresses this problem.

The operations of FIG. 10A assume that a first application is the foreground application and that the GUI for this application is displayed on the display screen 204 in a first screen orientation. The UI manager 226 then monitors for inputs which change foreground application. When input to change the foreground application to a second application is received by the operating system 222, it is reported to the UI manager 226 (step 952).

Next, in step 910 the UI manager 226 determines whether the first screen orientation matches a screen orientation rule for the foreground application 224. If the current screen orientation matches the screen orientation rule, the user interface manager 226 renders the user interface screen and its GUI interface elements for the second application 224 (i.e., the new foreground application) in accordance with the first screen orientation (i.e., aspect ratio) and the rendered user interface screen is displayed on the display screen 204 (step 954).

If the current screen orientation does not match the screen orientation rule, the user interface manager 226 requests an acceptable alternate screen orientation from the second application 224 (i.e., the new foreground application) (step 914). The user interface manager 226 then renders the user interface screen and its GUI interface elements for the second application 224 (i.e., the new foreground application) in accordance with the alternate screen orientation (i.e., aspect ratio) provided by the second application 224 and the rendered user interface screen is displayed on the display screen 204 (step 956).

In the shown embodiment, the user interface manager 226 sends a request to the operating system 222 to change the drawing origin to match the alternate screen orientation of the GUI displayed on the display screen 204. After the change in the screen orientation, the operating system 222 notifies the user interface manager 226 that the change has been performed (the GUI has been rotated or flipped). After the notification has been received by the user interface manager 226, it formats GUI interface elements for the second application in accordance with the alternate screen orientation and the GUI is rendered and displayed.

Reference is now made to FIG. 10B which illustrates example operations 960 for changing a foreground application in accordance with one example embodiment of the present disclosure will be described. The steps of FIG. 10B may be carried out by routines or subroutines of software executed by, for example, the processor 240. The coding of software for carrying out such steps is well within the scope of a person of ordinary skill in the art given the present disclosure. FIG. 10B illustrates an alternative embodiment which is combination of features form FIG. 9 and 10A.

A user interface screen of a first application is displayed on the display screen 204 as in FIG. 10A. When input to change the foreground application from the first application to a second application is received by the operating system 222, it is reported to the UI manager 226 (step 952). The UI manager 226 performs steps 904 to 909 as described above in connection with FIG. 9. The input to change the foreground application rather than a change in device orientation causes steps 904 to 909 to be performed.

Next, in step 910 the UI manager 226 determines whether the first screen orientation matches a screen orientation rule for new foreground application 224. If the current screen orientation matches the screen orientation rule, the user interface manager 226 renders the user interface screen and its GUI interface elements for the second application 224 (i.e., the new foreground application) in accordance with the first screen orientation (i.e., aspect ratio) and the rendered user interface screen is displayed on the display screen 204 (step 954).

If the current screen orientation does not match the screen orientation rule, the user interface manager 226 requests an acceptable alternate screen orientation from the second application 224 (i.e., the new foreground application) (step 914). The user interface manager 226 then renders the user interface screen and its GUI interface elements for the second application 224 (i.e., the new foreground application) in accordance with the alternate screen orientation (i.e., aspect ratio) provided by the second application 224 and the rendered user interface screen is displayed on the display screen 204 (step 956).

In the shown embodiment, the user interface manager 226 sends a request to the operating system 222 to change the drawing origin to match the alternate screen orientation of the GUI displayed on the display screen 204. After the change in the screen orientation, the operating system 222 notifies the user interface manager 226 that the change has been performed (the GUI has been rotated or flipped). After the notification has been received by the user interface manager 226, it formats GUI interface elements for the second application in accordance with the alternate screen orientation and the GUI is rendered and displayed.

### Power Saving Mode

The mobile communication device 201 includes various components which consume a lot of power and reduce the life of the battery 238, such as the display screen 204. Accordingly, conserving battery power and increasing battery life are important considerations in controlling device components. Various power saving techniques may be incorporated into the mobile communication device 201, for example, in the control mechanisms for controlling various device components and subsystems.

The present disclosure provides a mechanism to improve the battery life by powering down or possibly disabling the orientation sensor of the device orientation subsystem 249. Because the orientation sensor may be used by the device 201 for different purposes, any power saving mode used in connection with the orientation sensor should accommodate applications 224 which utilize the orientation sensor to avoid disrupting the operation of those applications 224. In one embodiment, the present disclosure provides a mechanism to improve the battery life by disabling the orientation sensor when the display screen 204 is in a low power mode or deactivated and the orientation sensor is being used only for determining the device orientation for dynamically changing the screen orientation of the GUI displayed on the display screen 204

The screen orientation of the GUI may switch between multiple screen orientations, for example between portrait screen orientations and landscape screen orientations, in accordance with the device orientation reported by the orientation sensor or the device orientation subsystem 249. Whether changes in the screen orientation occur in response to changes in device orientation depends on the foreground application 224 and the screen orientation rules defined for the foreground application 224. If the device 201 does not need to change screen orientation, for example because the display screen 204 is deactivated or disabled, the screen orientation of the GUI does not need to be updated and the user interface manager 226 can stop listening to device orientation change events. In such embodiments, this step comprises deregistering a device orientation event listener registered with the operating system 222 which is used by the operating system 222 for sending device orientation event notifications. When the orientation sensor is not required by any application 224 on the device 201, the orientation sensor and/or device orientation subsystem 249 may be put into a low power mode or deactivated/disabled since it is not required. Deactivating the orientation sensor reduces power consumption and which can provide noticeable power savings. Whether the orientation sensor enters a low power mode or is deactivated/disabled typically depends on the power saving routines on the device 201 and the respective settings.

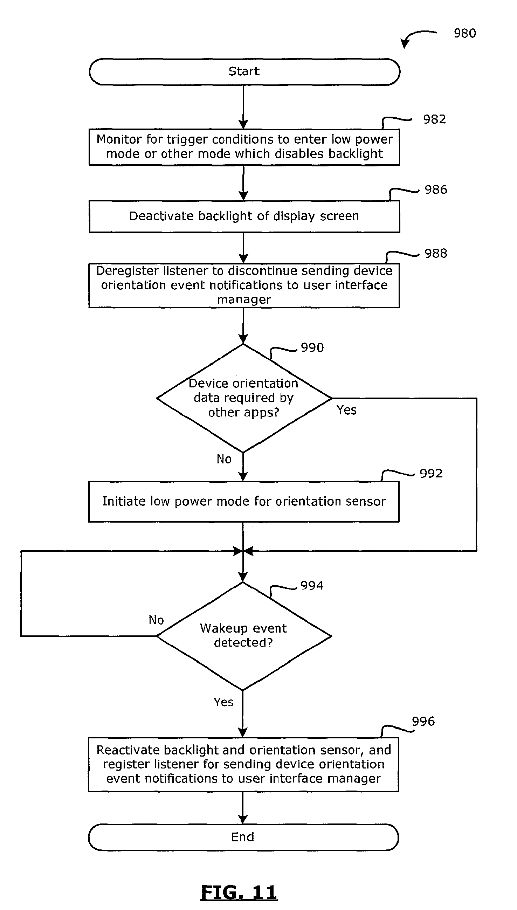

Reference is now made to FIG. 11 which illustrates example operations 980 for optimizing the use of the orientation sensor in accordance with one embodiment of the present disclosure. The steps of FIG. 11 may be carried out by routines or subroutines of software executed by, for example, the processor 240. The coding of software for carrying out such steps is well within the scope of a person of ordinary skill in the art given the present disclosure. The operations 980 are typically performed by the operating system 222.

When the user interface manager 226 registers a device orientation event listener with the operating system 222, the operating system 222 will send device orientation event notifications to user interface manager 226 when a change in device orientation is detected. The operating system 222 will also send device orientation event notifications to other processes or applications 224 having a device orientation event listener registered with the operating system 222. The change in device orientation may be used for many purpose including, but not limited to, changing the screen orientation of the GUI when required.

First, in step 982 the processor 240 monitors for trigger conditions for initiating a low power mode (also known as a sleep mode) in which the display screen 204 is deactivated. The display screen 204 is deactivated in most it not all low power modes as creates a significant power draw. The deactivation of the display screen 204 comprises deactivating a backlight (not shown) of the display screen 204 is. When the display screen 204 is part of a touchscreen display 210, the deactivating may comprise deactivating or reducing the scanning cycle of the touch-sensitive overlay 206 of the touchscreen display 210.

The trigger conditions may comprise one or any combination of: (i) initiation of a device lock mode or other security mode which places restrictions on the device functions and/or inputs accepted by its input devices (which may be user-implemented or automatic based on a security routine); (ii) lack of device activity for a predetermined duration (for example, a lack of input for a predetermined duration whereby the device 201 enters the sleep mode); (iii) a lack of wireless network coverage (e.g., a loss of communication with the wireless network 101); (iv) bolstering of the device 201 (when the device 201 is a holsterable device); and (v) closing of the device 201 (when the device 201 is a flip or slider style phone). The trigger conditions which cause the backlight of the display screen 204 to be disabled may be configurable.

The backlight of the display screen 204 is disabled in response the detection of a trigger condition (step 986). This allows battery power to be conserved. The trigger condition may be any one of the trigger conditions described above. The operating system 222 or other process then notifies the user interface manager 226 that the backlight of the display screen 204 has been disabled.

Next, in step 988 the user interface manager 226 deregister the device orientation event listener with the operating system 222 in response to receiving notification that the device 201 has entering the low power mode, or at least that the backlight of the display screen 204 has been disabled. The operating system 222 then stops sending device orientation event notifications to the user interface manager 226 which notify it of new device orientations. In other embodiments, rather than registering and deregistering listeners, the user interface manager 226 could notify or instruct the operating system 222 to send device orientation event notifications to it via other suitable means. user interface manager 226. solutions reduce the processing requirements on the processor 240 and saves battery power.

Next, in step 990 it is determined whether any active application 224 utilizes orientation data or other input from the orientation sensor. This step is typically performed by the operating system 222. It will be appreciated that the orientation sensor and/or device orientation subsystem 249, in at least some embodiments, provided two types of input: (1) raw data relating to the orientation sensor of the device 201 (e.g., motion); and (2) device orientation event notifications which notify the operating system 222 that a new device orientation has been detected (e.g., that a change in device orientation has been detected) and identifies the new device orientation in terms of one of the predetermined device orientations described above. As described above, the user interface manager 226 uses the device orientation to determine the appropriate screen orientation for the GUI.

The device orientation data output by the device orientation subsystem 249 may be used exclusivity by the user interface manager 226 to select the appropriate screen orientation for the GUI based for the current device orientation, render a user interface screen for the GUI accordance with the selected screen orientation, and the display the rendered user interface screen on the display screen 204 of the touchscreen display 210. However, the device orientation or raw data (if supported by the respective embodiment) may be used by other applications 224. In some embodiments, a list of applications 224 which utilize input from the orientation sensor may be maintained for use in making the decision in step 990.

If no active applications 224 utilize the orientation sensor, the operating system 222 may instruct the control mechanism for the orientation sensor, typically the controller of the device orientation subsystem 249, to enter a low power mode. In the low power mode, the orientation sensor and/or device orientation subsystem 249 operated at a reduced duty cycle compared to the normal on-mode or full-power mode. In some embodiments, the orientation sensor and/or device orientation subsystem 249 may be deactivated when not in use rather than enter a low power mode. Whether a low power mode is entered or the orientation sensor and/or device orientation subsystem 249 is disabled/deactivated depends on the settings and configuration of the low power mode. In some embodiments, no change to the orientation sensor and/or device orientation subsystem 249 occur even when not in use.

If active applications 224 utilize input from the orientation sensor, processing of the operations 980 end (step 992). For example, in some embodiments the orientation sensor could be used to detect changes in orientation of the device 201 and a wakeup event for the device 201. Thus, deactivating the orientation sensor in the low power mode reduces the type of wakeup events recognized by the device 201.

Next, in the processor 240 monitors for a wakeup event which may be a screen press which activates the actuator 261, a key press on one of the control keys 260, a key press on a key of a keyboard or keypad, or a touch event on the touch-sensitive overlay 206 depending on the available input devices and the sleep/wake settings (step 994). When a wakeup event is detected, the display screen 204, the orientation sensor returns to a full power mode from low power mode and return to the full (normal) duty cycle of detecting device orientation, and the device orientation event listener is registered with the operating system 222 (step 996). If the orientation sensor and/or device orientation subsystem 249 was deactivated in the low power mode, it is reactivated.

While the operations 980 have been described as occurring in a particular order, it will be appreciated to persons skilled in the art that some of the steps may be performed in a different order provided that the result of the changed order of any given step will not prevent or impair the occurrence of subsequent steps. Furthermore, some of the steps described above may be combined in other embodiments, and some of the steps described above may be separated into a number of sub-steps in other embodiments. For example, in other embodiments, step 990 may be omitted and the orientation sensor and/or device orientation subsystem 249 may enter a low power mode or be deactivated each time the backlight of the display screen 204 is deactivated. This may be, for example, because it is known that no other applications 224 utilize the orientation sensor and/or device orientation subsystem 249, or that the applications 224 which use the orientation sensor and/or device orientation subsystem 249 are not active when the display screen 204 is deactivated. In yet other embodiments, the operations 900 do not assess whether the device orientation are being used by other applications and the orientation sensor and/or device orientation subsystem 249 do not enter a low power mode or become disabled. In such embodiments, steps 990 and 992 are omitted.

It will be appreciated that the processes 900, 950 and 980 can be run at the same time, e.g. in parallel, to further optimize use of the orientation sensor.

### Example Communication System

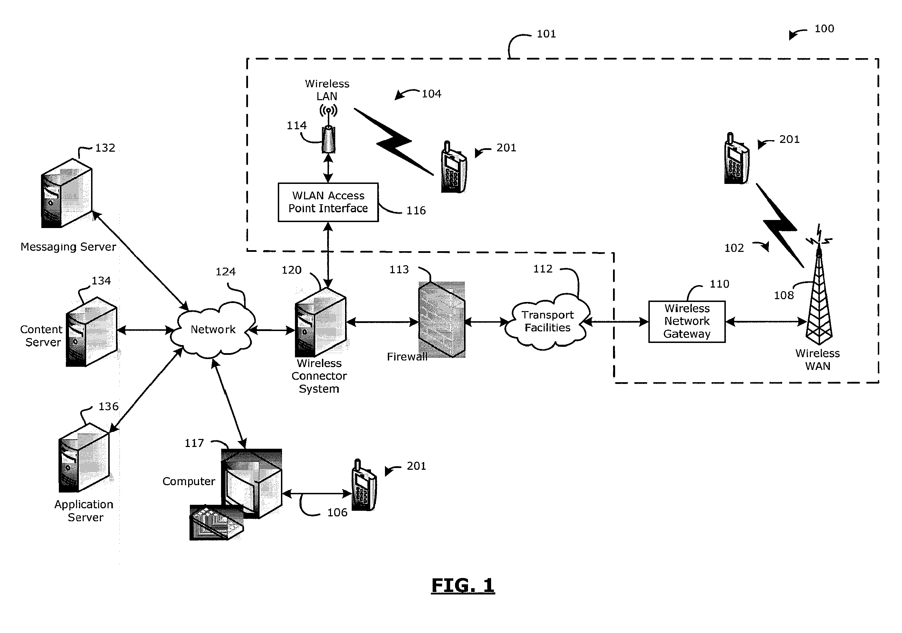

In order to facilitate an understanding of one possible environment in which example embodiments described herein can operate, reference is made to FIG. 1 which shows in block diagram form a communication system 100 in which example embodiments of the present disclosure can be applied. The communication system 100 comprises a number of mobile communication devices 201 which may be connected to the remainder of system 100 in any of several different ways. Accordingly, several instances of mobile communication devices 201 are depicted in FIG. 1 employing different example ways of connecting to system 100. Mobile communication devices 201 are connected to a wireless network 101 which may comprise one or more of a Wireless Wide Area Network (WWAN) 201 and a Wireless Local Area Network (WLAN) 104 or other suitable network arrangements. In some embodiments, the mobile communication devices 201 are configured to communicate over both the WWAN 201 and WLAN 104, and to roam between these networks. In some embodiments, the wireless network 101 may comprise multiple WWANs 201 and WLANs 104.

The WWAN 201 may be implemented as any suitable wireless access network technology. By way of example, but not limitation, the WWAN 201 may be implemented as a wireless network that includes a number of transceiver base stations 108 (one of which is shown in FIG. 1) where each of the base stations 108 provides wireless Radio Frequency (RF) coverage to a corresponding area or cell. The WWAN 201 is typically operated by a mobile network service provider that provides subscription packages to users of the mobile communication devices 201. In some embodiments, the WWAN 201 conforms to one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSPDA (High-Speed Downlink Packet Access), IEEE 802.16e (also referred to as Worldwide Interoperability for Microwave Access or "WiMAX), or various other networks. Although WWAN 201 is described as a "Wide-Area" network, that term is intended herein also to incorporate wireless Metropolitan Area Networks (WMAN) and other similar technologies for providing coordinated service wirelessly over an area larger than that covered by typical WLANs.

The WWAN 201 may further comprise a wireless network gateway 110 which connects the mobile communication devices 201 to transport facilities 112, and through the transport facilities 112 to a wireless connector system 120. Transport facilities may include one or more private networks or lines, the public Internet, a virtual private network, or any other suitable network. The wireless connector system 120 may be operated, for example, by an organization or enterprise such as a corporation, university, or governmental department, which allows access to a network 124 such as an internal or enterprise network and its resources, or the wireless connector system 120 may be operated by a mobile network provider. In some embodiments, the network 124 may be realised using the Internet rather than an internal or enterprise network.

The wireless network gateway 110 provides an interface between the wireless connector system 120 and the WWAN 201, which facilitates communication between the mobile communication devices 201 and other devices (not shown) connected, directly or indirectly, to the WWAN 201. Accordingly, communications sent via the mobile communication devices 201 are transported via the WWAN 201 and the wireless network gateway 110 through transport facilities 112 to the wireless connector system 120. Communications sent from the wireless connector system 120 are received by the wireless network gateway 110 and transported via the WWAN 201 to the mobile communication devices 201.

The WLAN 104 comprises a wireless network which, in some embodiments, conforms to IEEE 802.11x standards (sometimes referred to as Wi-Fi) such as, for example, the IEEE 802.11a, 802.11b and/or 802.11g standard. Other communication protocols may be used for the WLAN 104 in other embodiments such as, for example, IEEE 802.11n, IEEE 802.16e (also referred to as Worldwide Interoperability for Microwave Access or "WiMAX"), or IEEE 802.20 (also referred to as Mobile Wireless Broadband Access). The WLAN 104 includes one or more wireless RF Access Points (AP) 114 (one of which is shown in FIG. 1) that collectively provide a WLAN coverage area.

The WLAN 104 may be a personal network of the user, an enterprise network, or a hotspot offered by an Internet service provider (ISP), a mobile network provider, or a property owner in a public or semi-public area, for example. The access points 114 are connected to an access point (AP) interface 116 which may connect to the wireless connector system 120 directly (for example, if the access point 114 is part of an enterprise WLAN 104 in which the wireless connector system 120 resides), or indirectly as indicated by the dashed line if FIG. 1 via the transport facilities 112 if the access point 14 is a personal Wi-Fi network or Wi-Fi hotspot (in which case a mechanism for securely connecting to the wireless connector system 120, such as a virtual private network (VPN), may be required). The AP interface 116 provides translation and routing services between the access points 114 and the wireless connector system 120 to facilitate communication, directly or indirectly, with the wireless connector system 120.

The wireless connector system 120 may be implemented as one or more servers, and is typically located behind a firewall 113. The wireless connector system 120 manages communications, including email communications, to and from a set of managed mobile communication devices 201. The wireless connector system 120 also provides administrative control and management capabilities over users and mobile communication devices 201 which may connect to the wireless connector system 120.

The wireless connector system 120 allows the mobile communication devices 201 to access the network 124 and connected resources and services such as a messaging server 132 (for example, a Microsoft Exchange™, IBM Lotus Domino™, or Novell GroupWise™ email server), and a content server 134 for providing content such as Internet content or content from an organization's internal servers, and application servers 136 for implementing server-based applications such as instant messaging (IM) applications to mobile communication devices 201.

The wireless connector system 120 typically provides a secure exchange of data (e.g., email messages, personal information manager (PIM) data, and IM data) with the mobile communication devices 201. In some embodiments, communications between the wireless connector system 120 and the mobile communication devices 201 are encrypted. In some embodiments, communications are encrypted using a symmetric encryption key implemented using Advanced Encryption Standard (AES) or Triple Data Encryption Standard (Triple DES) encryption. Private encryption keys are generated in a secure, two-way authenticated environment and are used for both encryption and decryption of data. In some embodiments, the private encryption key is stored only in the user's mailbox on the messaging server 132 and on the mobile communication device 201, and can typically be regenerated by the user on mobile communication devices 201. Data sent to the mobile communication devices 201 is encrypted by the wireless connector system 120 using the private encryption key retrieved from the user's mailbox. The encrypted data, when received on the mobile communication devices 201, is decrypted using the private encryption key stored in memory. Similarly, data sent to the wireless connector system 120 from the mobile communication devices 201 is encrypted using the private encryption key stored in the memory of the mobile communication device 201. The encrypted data, when received on the wireless connector system 120, is decrypted using the private encryption key retrieved from the user's mailbox.

The wireless network gateway 110 is adapted to send data packets received from the mobile communication device 201 over the WWAN 201 to the wireless connector system 120. The wireless connector system 120 then sends the data packets to the appropriate connection point such as the messaging server 132, content server 134 or application servers 136. Conversely, the wireless connector system 120 sends data packets received, for example, from the messaging server 132, content server 134 or application servers 136 to the wireless network gateway 110 which then transmit the data packets to the destination mobile communication device 201. The AP interfaces 116 of the WLAN 104 provide similar sending functions between the mobile communication device 201, the wireless connector system 120 and network connection point such as the messaging server 132, content server 134 and application server 136.

The network 124 may comprise a private local area network, metropolitan area network, wide area network, the public Internet or combinations thereof and may include virtual networks constructed using any of these, alone, or in combination.

A mobile communication device 201 may alternatively connect to the wireless connector system 120 using a computer 117, such as desktop or notebook computer, via the network 124. A link 106 may be provided for exchanging information between the mobile communication device 201 and computer 117 connected to the wireless connector system 120. The link 106 may comprise one or both of a physical interface and short-range wireless communication interface. The physical interface may comprise one or combinations of an Ethernet connection, Universal Serial Bus (USB) connection, Firewire™ (also known as an IEEE 1394 interface) connection, or other serial data connection, via respective ports or interfaces of the mobile communication device 201 and computer 117. The short-range wireless communication interface may be a personal area network (PAN) interface. A personal area network is a wireless point-to-point connection meaning no physical cables are required to connect the two end points. The short-range wireless communication interface may comprise one or a combination of an infrared (IR) connection such as an Infrared Data Association (IrDA) connection, a short-range radio frequency (RF) connection such as one specified by IEEE 802.15.1 or the Bluetooth™ special interest group, or IEEE 802.15.3a, also referred to as UltraWideband (UWB), or other PAN connection.

It will be appreciated that the above-described communication system is provided for the purpose of illustration only, and that the above-described communication system comprises one possible communication network configuration of a multitude of possible configurations for use with the mobile communication devices 201. The teachings of the present disclosure may be employed in connection with any other type of network and associated devices that are effective in implementing or facilitating wireless communication. Suitable variations of the communication system will be understood to a person of skill in the art and are intended to fall within the scope of the present disclosure.

While the present disclosure is primarily described in terms of methods, a person of ordinary skill in the art will understand that the present disclosure is also directed to various apparatus such as a handheld electronic device including components for performing at least some of the aspects and features of the described methods, be it by way of hardware components, software or any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present disclosure.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray™ Disc, and a solid state storage device (e.g., NAND flash or synchronous dynamic RAM (SDRAM)).

The various embodiments presented above are merely examples and are in no way meant to limit the scope of this disclosure. Variations of the innovations described herein will be apparent to persons of ordinary skill in the art, such variations being within the intended scope of the present application. In particular, features from one or more of the above-described embodiments may be selected to create alternative embodiments comprised of a sub-combination of features which may not be explicitly described above. In addition, features from one or more of the above-described embodiments may be selected and combined to create alternative embodiments comprised of a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

## Claims

1. A method of rendering a graphical user interface (GUI) on a portable electronic device, comprising:

   displaying a user interface screen of a foreground application on a display screen of the portable electronic device in a first screen orientation;
   receiving a device orientation event notification from an orientation sensor of the portable electronic device, the device orientation event notification specifying a device orientation;
   determining a preferred screen orientation associated with the device orientation;
   determining whether the preferred screen orientation matches a screen orientation rule for the foreground application; and
   re-displaying the user interface screen on the display screen in accordance with the preferred screen orientation when the preferred screen orientation matches the screen orientation rule for the foreground application only when it differs from the first screen orientation.

2. The method of claim 1, further comprising maintaining the user interface screen in the first screen orientation when the preferred screen orientation matches the screen orientation rule for the foreground application but the first screen orientation is the same as the preferred screen orientation.

3. The method of claim 1 or claim 2, further comprising determining whether a preferred screen orientation is defined for the device orientation, wherein it is determined whether the preferred screen orientation matches the screen orientation rule for the foreground application only when a preferred screen orientation is defined for the device orientation.

**4.** The method of claim 3, further comprising:

determining whether the first screen orientation matches the screen orientation rule for the foreground application when the preferred screen orientation is undefined for the device orientation, or when the preferred screen orientation is defined but does not match the screen orientation rule for the foreground application;
maintaining the user interface screen in the first screen orientation when the first screen orientation matches the screen orientation rule for the foreground application and the preferred screen orientation is undefined for the device orientation or the preferred screen orientation does not match the screen orientation rule for the foreground application; and
setting the preferred screen orientation to an alternate screen orientation specified by the foreground application when the first screen orientation does not match the screen orientation rule for the foreground application and the preferred screen orientation is undefined for the device orientation or the preferred screen orientation does not match the screen orientation rule for the foreground application.

**5.** The method of claim 4, wherein the preferred screen orientation is defined when the portable electronic device is in a top up device orientation in which a top of the device is oriented generally upwards, a bottom up device orientation in which a bottom of the device is oriented generally upwards, a left up device orientation in which a left side of the device is oriented generally upwards, or a right up device orientation in which a right side of the device is oriented generally upwards.

**6.** The method of claim 5, wherein the preferred screen orientation is undefined when the portable electronic device is in a back up device orientation in which a back of the device is oriented generally upwards or a front up device orientation in which a front face of the device is oriented generally upwards.

**7.** The method of any one of claims 1 to 6, further comprising detecting changes in device orientation and generating device orientation event notifications when a change in device orientation is detected.

**8.** The method of claim 7, wherein a change in device orientation is detected when the device changes from one predetermined device position to another predetermined device position, wherein the predetermined device positions are a top up device orientation in which a top of the device is oriented generally upwards, a bottom up device orientation in which a bottom of the device is oriented generally upwards, a left up device orientation in which a left side of the device is oriented generally upwards, a right up device orientation in which a right side of the device is oriented generally upwards, a back up device orientation in which a back of the device is oriented generally upwards, or a front up device orientation in which a front face of the device is oriented generally upwards.

**9.** The method of any one of claims 1 to 8, further comprising determining when a backlight of a display screen of the portable electronic device is deactivated; wherein device orientation event notifications are not received when the backlight of the display screen of the portable electronic device is deactivated.

**10.** The method of any one of claims 1 to 9, further comprising determining when a backlight of a display screen of the portable electronic device is deactivated; wherein device orientation event notifications are ignored when the backlight of the display screen of the portable electronic device is deactivated.

**11.** A method of rendering a graphical user interface (GUI) on a portable electronic device, comprising:

displaying a user interface screen of a foreground application on a display screen of the portable electronic device in a first screen orientation;
receiving input to change the foreground application from a first application to a second application;
determining whether the first screen orientation matches a screen orientation rule for the second application;
displaying a user interface screen of the second application in accordance with first screen orientation when it matches the screen orientation rule for the second application; and
displaying a user interface screen of the second application in accordance with an alternate screen orientation specified by the second application when the first screen orientation does not match the screen orientation rule for the second application.

**12.** A method of controlling an orientation sensor of a portable electronic device, the method comprising:

monitoring for a trigger condition for initiating a low power mode in which a backlight of a display screen of the portable electronic device is deactivated; and
discontinuing the sending of device orientation event notifications to a user interface manager when the backlight of the display screen of the portable electronic device is deactivated.

13. The method of claim 12, further comprising:

determining whether the orientation sensor is required by any active applications on the portable electronic device in response to detecting a trigger condition; and
deactivating the orientation sensor when the backlight of the display screen is deactivated and the orientation sensor is not required by any active applications on the portable electronic device.

14. The method of claim 12 or claim 13, further comprising:

monitoring for a wakeup event; and
reactivating the orientation sensor and backlight of the display screen in response to detection of the wakeup event.

15. A portable electronic device, comprising: a processor: a display screen connected to the processor; the processor being configured to perform the method of any one of claims 1 to 14.

**FIG. 1**

**FIG. 2**

**FIG. 3**

**FIG. 4**

(0, 0)           x          (x max., 0)

y

(x, y)

(0, y max.)          (x max., y max.)

Finger
contact area

Fingertip

**FIG. 5**

600

612

Interrupt

610

MCU

sensor

Serial
interface

**FIG. 6**

FRI, JAN 13    3:32 PM

210

322

326          328

260

324

Top up Device Orientation

**FIG. 7A**

260          324

FRI, JAN 13    3:32 PM

326          328

210

322

Bottom up Device Orientation

**FIG. 7B**

260

FRI, JAN 13   3:32 PM

326

210

322

g

328

324

Left up Device Orientation

**FIG. 7C**

260

FRI, JAN 13   3:32 PM

326

210

322

328

324

g

Right up Device Orientation

**FIG. 7D**

210    305

g

307

Front up Device Orientation

**FIG. 7E**

307

g

Back up Device Orientation    210  305

**FIG. 7F**

FIG. 8A

FIG. 8B

FIG. 8C

```
                    ┌─────────────────────┐
                    │        Start        │
                    └─────────────────────┘
                               │
                               ▼
                    ┌─────────────────────┐ ╭─ 901
                    │ Display user interface screen in first screen
                    │       orientation   │
                    └─────────────────────┘
                               │
                               ▼
                    ┌─────────────────────┐ ╭─ 902
                    │ Receive device orientation event
                    │ notification from orientation sensor
                    └─────────────────────┘
                               │
                               ▼
                    ┌─────────────────────┐ ╭─ 904
                    │ Determine the current screen orientation
                    │ of the graphical user interface
                    └─────────────────────┘
                               │
                               ▼
                    ┌─────────────────────┐ ╭─ 906
                    │ Determine a preferred screen orientation
                    │ in accordance with the device orientation
                    └─────────────────────┘
```

— 900

**FIG. 9**

```
          908                              909
    Preferred screen      Yes     Preferred screen        Yes
    orientation defined?  ───►     orientation
                                   matches screen
                                   orientation rule?
         │ No                              │ No
```

```
          910                              914
    Current screen        No      Set preferred screen
    orientation matches   ───►    orientation to screen
    screen orientation            orientation provided by
    rule?                         application
     │ Yes
```

```
          916
    Preferred screen       No
    orientation differs from
    current screen
    orientation?
         │ Yes
```

```
          918
    Redisplay user interface screen in
    preferred screen orientation
```

```
                    ┌─────────────────────┐
                    │         End         │
                    └─────────────────────┘
```

Start — 950

Detect input to change foreground application — 952

Current screen orientation matches screen orientation rule? — 910

Yes

No

Obtain alternate screen orientation provided from application — 914

Display user interface screen for new foreground application in current screen orientation — 954

Display user interface screen for new foreground application in alternate screen orientation — 956

End

**FIG. 10A**

960

Start

Detect input to change foreground
application

952

Determine the current screen orientation
of the graphical user interface

904

Determine a preferred screen orientation
in accordance with the device orientation

906

Preferred screen
orientation defined?

908

Yes

Preferred screen
orientation
matches screen
orientation rule?

909

Yes

No

No

Current screen
orientation matches
screen orientation
rule?

910

Yes

No

Obtain alternate screen
orientation provided
from application

914

**FIG. 10B**

Display user interface
screen for new foreground
application in current
screen orientation

954

Display user interface
screen for new foreground
application in preferred
screen orientation

956

End

980

```
┌──────────────────────────────────┐
│              Start                │
└──────────────────────────────────┘
                  │
                  ▼
┌──────────────────────────────────┐  982
│ Monitor for trigger conditions to enter low power │
│ mode or other mode which disables backlight       │
└──────────────────────────────────┘
                  │
                  ▼
┌──────────────────────────────────┐  986
│   Deactivate backlight of display screen          │
└──────────────────────────────────┘
                  │
                  ▼
┌──────────────────────────────────┐  988
│ Deregister listener to discontinue sending device │
│ orientation event notifications to user interface │
│ manager                                           │
└──────────────────────────────────┘
                  │
                  ▼
              ◇ 990
        Device orientation
        data required by ───── Yes ──┐
        other apps?                   │
              │                       │
              No                      │
              ▼                       │
┌──────────────────────────────────┐ 992
│ Initiate low power mode for orientation sensor    │
└──────────────────────────────────┘
                  │                   │
                  ▼◄──────────────────┘
              ◇ 994
┌─ No ──  Wakeup event
│         detected?
│             │
│             Yes
│             ▼
│   ┌──────────────────────────────────┐ 996
│   │ Reactivate backlight and orientation sensor, and │
│   │ register listener for sending device orientation │
│   │ event notifications to user interface manager    │
│   └──────────────────────────────────┘
│             │
│             ▼
│   ┌──────────────────────────────────┐
│   │              End                  │
│   └──────────────────────────────────┘
```

**FIG. 11**

**EUROPEAN SEARCH REPORT**

Application Number

EP 09 17 2484

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/085870 A1 (HINCKLEY KENNETH P [US]) 8 May 2003 (2003-05-08) <br> * abstract * <br> * paragraph [0082] * <br> * paragraphs [0100] - [0116] * <br> * figures 10-18 * <br> ----- | 1-8,11, 15 | INV. <br> G06F1/16 |
| X | US 2008/165152 A1 (FORSTALL SCOTT [US] ET AL) 10 July 2008 (2008-07-10) <br> * the whole document * <br> * abstract * <br> * paragraphs [0009] - [0015] * <br> ----- | 1-8,11, 15 | |
| X | ANONYMOUS: "iPhone OS version history" , [Online] 29 June 2007 (2007-06-29), pages 1-20, XP002561564 <br> Retrieved from the Internet: <br> URL:http://en.wikipedia.org/wiki/IPhone_OS _version_history> <br> [retrieved on 2009-12-22] <br> * pages 1-8 * <br> ----- | 1-15 | |

TECHNICAL FIELDS SEARCHED (IPC)

G06F

The present search report has been drawn up for all claims

| Place of search | Date of completion of the search | Examiner |
|---|---|---|
| The Hague | 25 February 2010 | Dieben, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 09 17 2484

The Search Division considers that the present European patent application does not comply with the
requirements of unity of invention and relates to several inventions or groups of inventions, namely:

1. claims: 1-8, 15

A method of rendering a graphical user interface (GUI) on a
portable electronic device, comprising:
displaying a user interface screen of a foreground
application on a display screen of the portable electronic
device in a first screen orientation;
receiving a device orientation event notification from an
orientation sensor of the portable electronic device, the
device orientation event notification specifying a device
orientation;
determining a preferred screen orientation associated with
the device orientation;
determining whether the preferred screen orientation matches
a screen orientation rule for the foreground application;
and
re-displaying the user interface screen on the display
screen in accordance with the preferred screen orientation
when the preferred screen orientation matches the screen
orientation rule for the foreground application only when it
differs from the first screen orientation.

1.1. claim: 11

Subject-matter corresponding to the subject-matter of claim
1.
---

2. claims: 9-10, 12-14

A method of controlling an orientation sensor of a portable
electronic device, the method comprising:
monitoring for a trigger condition for initiating a low
power mode in which a
backlight of a display screen of the portable electronic
device is deactivated; and
discontinuing the sending of device orientation event
notifications to a user interface manager when the backlight
of the display screen of the portable electronic device is
deactivated.
---

Please note that all inventions mentioned under item 1, although not
necessarily linked by a common inventive concept, could be searched
without effort justifying an additional fee.

## ANNEX TO THE EUROPEAN SEARCH REPORT
## ON EUROPEAN PATENT APPLICATION NO.

EP 09 17 2484

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2010

| Patent document cited in search report | Publication date | Patent family member(s) | Publication date |
|---|---|---|---|
| US 2003085870 A1 | 08-05-2003 | NONE | |
| US 2008165152 A1 | 10-07-2008 | WO 2008086303 A1 | 17-07-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040155991 A
- US 71787703 A